# EUROPEAN PATENT APPLICATION

(11) **EP 4 177 475 A1**
(43) Date of publication of application: **10.05.2023**
(21) Application number: 21837124.3
(22) Date of filing: 02.06.2021
(51) Int. Cl.: F04D 29/44, F04D 29/42, H02K 5/00

(54) **FAN CASE, MOTOR UNIT, AND MOVING BODY**

(30) Priority: 06.07.2020 JP 2020116695
(71) Applicant: Panasonic Intellectual Property Management Co., Ltd., Osaka-shi, Osaka 540-6207 (JP)
(72) Inventor: KATO, Masatsugu, Chuo-ku, Osaka-shi, Osaka 540-6207 (JP); MATSUMOTO, Taehiro, Chuo-ku, Osaka-shi, Osaka 540-6207 (JP); ISODA, Mineaki, Chuo-ku, Osaka-shi, Osaka 540-6207 (JP)
(74) Representative: SSM Sandmair
(86) International application number: PCT/JP2021/020994
(87) International publication number: WO 2022/009565

(57) **Abstract**

A fan case includes a first member and a second member. The first member includes a first main body and at least one hook. The at least one hook is disposed at at least one location on the outer periphery of the first main body in plan view from a first direction. The second member includes a second main body and at least one claw. The at least one claw is disposed on the outer periphery of the second main body in plan view from the first direction, at a position corresponding to the at least one hook to allow the at least one hook to be hooked on the at least one claw. At least one of the at least one hook extends from an end of a first opening of the first main body toward the second member along the first direction.

## Description

### TECHNICAL FIELD

The present disclosure relates to a fan case, a motor unit, and a moving body. More specifically, the present disclosure relates to a fan case including a first member and a second member, a motor unit including the fan case, and a moving body including the motor unit.

### BACKGROUND ART

PTL 1 describes a coupling structure between air conditioning units. The coupling structure described in PTL 1 includes: an engaging hole that is at an upper portion of a fitting part of a first air conditioning unit and protrudes from the first air conditioning unit toward a second air conditioning unit; and an engaging protruding portion that protrudes from the second air conditioning unit to be inserted into and engaged with the engaging hole. The two air conditioning units are coupled by fitting the fitting parts to each other while the engaging protruding portion is inserted into the engaging hole.

However, in the conventional coupling structure described in PTL 1, the engaging hole and the engaging protruding portion are located on the outside (protrude) in directions orthogonal to the direction in which the two air conditioning units are coupled. Therefore, there is a problem that the air conditioning units coupled with the coupling structure are large.

### Citation List

### Patent Literature

PTL 1: Unexamined Japanese Patent Publication No. 2006-315583

### SUMMARY OF THE INVENTION

The present disclosure is an invention that has been made in view of the above point. An object of the present disclosure is to provide a fan case, a motor unit, and a moving body that can be downsized.

A fan case according to one aspect of the present disclosure contains a motor. In the motor, a rotor that includes a rotating shaft extending in a first direction rotates on an axial center of the rotating shaft as a rotation center. The fan case includes a first member and a second member. The first member and the second member are coupled to each other along the first direction. The first member includes a first main body and at least one hook. The first main body has a first opening that opens toward the second member. The at least one hook is disposed on the outer periphery of the first main body in plan view from the first direction. The second member includes a second main body and at least one claw. The second main body has a second opening that opens toward the first member. The at least one claw is disposed on the outer periphery of the second main body in plan view from the first direction, at a position corresponding to the at least one hook to allow the at least one hook to be hooked on the at least one claw. At least one of the at least one hook extends from an end of the first opening of the first main body toward the second member along the first direction.

In addition, the at least one hook may be a plurality of hooks, the at least one claw may be a plurality of claws, and the first member and the second member may be coupled to each other by hooking the plurality of hooks on the plurality of respective claws.

Preferably, at least one of an outer surface and an inner surface of each of the at least one hook is along an outer peripheral surface of the first main body in plan view from the first direction.

Preferably, the outer surface of the hook is curved along the outer peripheral surface of the first main body in plan view from the first direction.

Preferably, the outer surface of the hook is flat.

In addition, the first member may include a flange at the end of the first opening of the first main body, and a gap may be between the flange and the hook in a circumferential direction of the first main body.

In addition, the first member may include a protrusion on an extension line of the hook in the first direction in the first main body.

In addition, a first distance between the flange and a first hooked portion of the hook on which the claw is hooked may be shorter in the first direction than a second distance between the second opening of the second main body and a second hooked portion of the claw on which the hook is hooked.

In addition, the first member or the second member may include an outer peripheral flange of an exhaust port.

Preferably, the tip of the claw is along an outer peripheral surface of the first main body in plan view from the first direction.

Preferably, the at least one hook is a plurality of hooks, the first main body has an outer peripheral surface including a plurality of regions having different curvatures, and the plurality of hooks is along the outer peripheral surface.

Preferably, the at least one hook and the at least one claw are located inside the outermost portion of the first main body in plan view from the first direction.

A motor unit according to an aspect of the present disclosure includes the fan case and the motor.

A moving body according to an aspect of the present disclosure includes the motor unit and a moving body main body. The motor unit is mounted on the moving body main body.

In accordance with the fan case, the motor unit, and the moving body according to the above aspects of the present disclosure, fan cases, motor units, and moving bodies can be downsized.

### BRIEF DESCRIPTION OF THE DRAWINGS

Fig. 1 is a perspective view of a fan case according to a first exemplary embodiment.
Fig. 2 is a side view of the fan case.
Fig. 3 is a top view of the fan case.
Fig. 4 is an exploded perspective view of the fan case.
Fig. 5 is a perspective view of a first member of the fan case.
Fig. 6 is an exploded perspective view of a main part of a motor unit according to the first exemplary embodiment.
Fig. 7A is a perspective view of a hook of the first member of the fan case.
Fig. 7B is a perspective view of a claw of a second member of the fan case.
Fig. 8A is a perspective view of a hook and a claw in the fan case with the first member and the second member fitted to each other.
Fig. 8B is a front view of the hook and the claw in the fan case with the first member and the second member fitted to each other.
Fig. 8C is a side view of the hook and the claw in the fan case with the first member and the second member fitted to each other.
Fig. 9 is an external view of the motor unit according to the first exemplary embodiment.
Fig. 10 is a perspective view of a fan case according to a second exemplary embodiment.
Fig. 11 is a top view of the fan case.
Fig. 12 is an exploded perspective view of the fan case.
Fig. 13A is a perspective view of a hook of a first member of the fan case.
Fig. 13B is a perspective view of a claw of a second member of the fan case.
Fig. 14A is a perspective view of a hook and a claw in the fan case with the first member and the second member fitted to each other.
Fig. 14B is a front view of the hook and the claw in the fan case with the first member and the second member fitted to each other.
Fig. 14C is a side view of the hook and the claw in the fan case with the first member and the second member fitted to each other.
Fig. 15 is a perspective view of a fan case according to a third exemplary embodiment.
Fig. 16 is a top view of the fan case.
Fig. 17 is an exploded perspective view of the fan case.
Fig. 18 is a perspective view of a first member of the fan case.
Fig. 19A is a perspective view of a hook of the first member of the fan case.
Fig. 19B is a perspective view of a claw of a second member of the fan case.
Fig. 20A is a perspective view of a hook and a claw in the fan case with the first member and the second member fitted to each other.
Fig. 20B is a front view of the hook and the claw in the fan case with the first member and the second member fitted to each other.
Fig. 20C is a side view of the hook and the claw in the fan case with the first member and the second member fitted to each other.
Fig. 21 is a schematic diagram of a vehicle according to a fourth exemplary embodiment.

### DESCRIPTION OF EMBODIMENT

Hereinafter, a fan case and a motor unit according to first and second exemplary embodiments, and a vehicle (moving body) according to a fourth exemplary embodiment will be described with reference to the drawings. The drawings referred to in the following exemplary embodiments and the like are schematic views, and sizes, thicknesses, and ratios in sizes and thicknesses of components in the drawings do not necessarily reflect actual dimensional ratios.

### (First exemplary embodiment)

### (1) Fan case

A configuration of fan case 1 according to a first exemplary embodiment will be described with reference to the drawings.

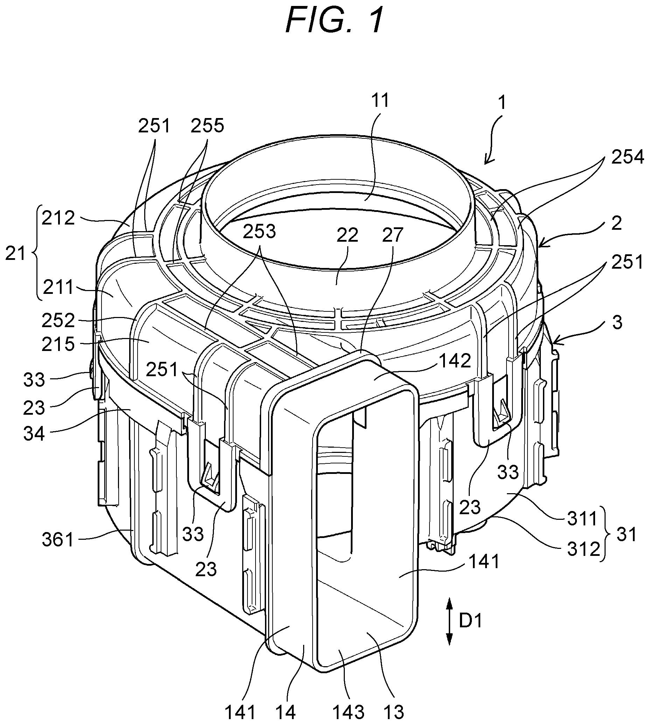

Fig. 1 is a perspective view of fan case 1 according to the first exemplary embodiment. As illustrated in Fig. 1, fan case 1 according to the first exemplary embodiment includes first member 2 and second member 3. Fan case 1 has a structure in which first member 2 and second member 3 are coupled to each other along first direction D1.

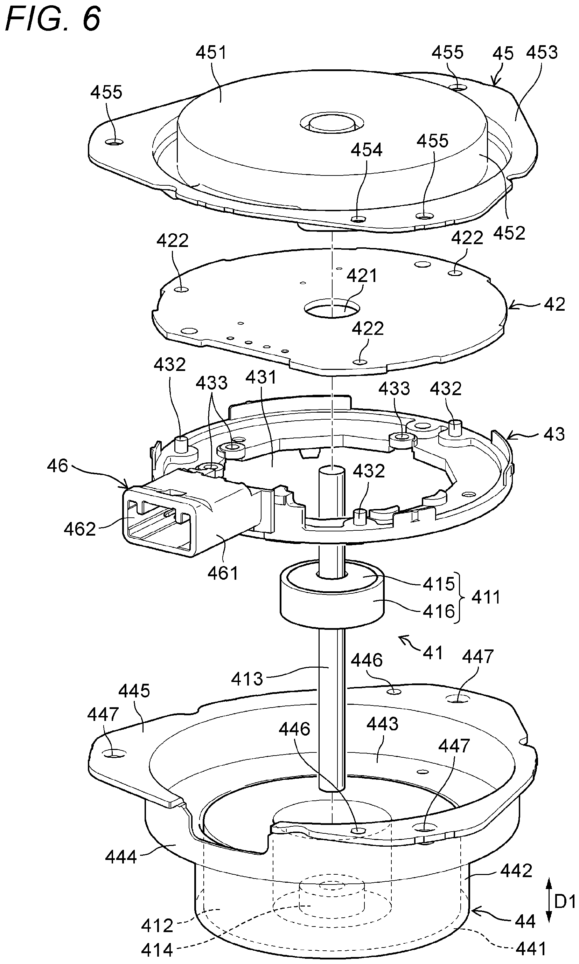

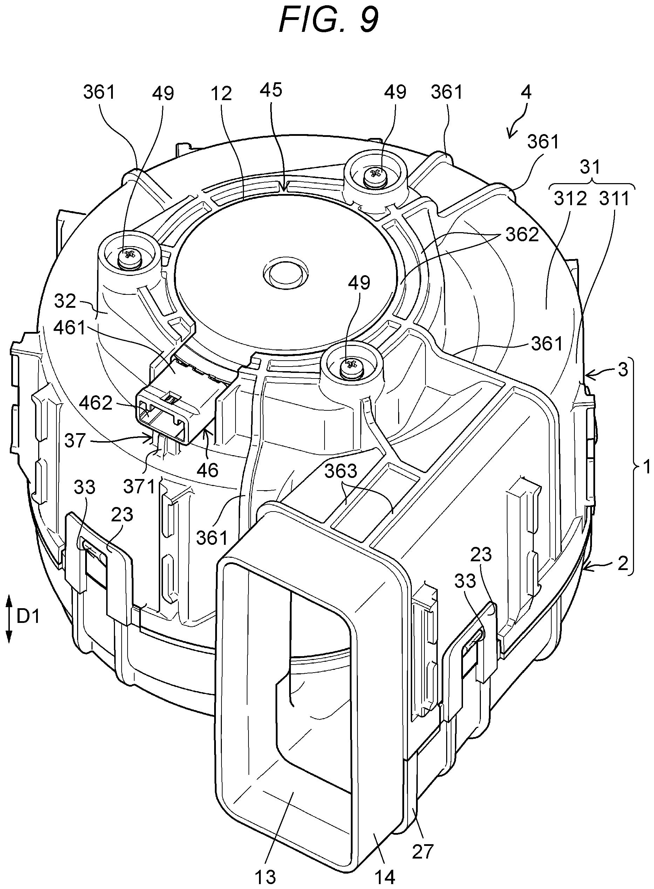

Fan case 1 is used, for example, in motor unit 4 as illustrated in Fig. 9 including motor 41 as illustrated in Fig. 6. Fig. 9 is an external view of a motor unit according to the first exemplary embodiment. Fig. 6 is an exploded perspective view of a main part of the motor unit according to the first exemplary embodiment. Fan case 1 contains motor 41.

### (2) Motor unit

A configuration of motor unit 4 will be described with reference to the drawings.

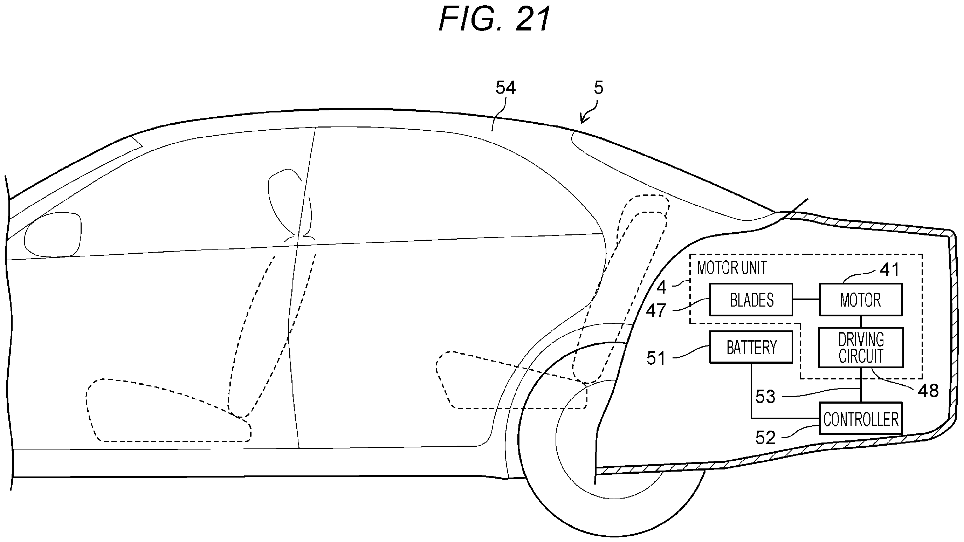

As illustrated in Fig. 9, motor unit 4 according to the first exemplary embodiment includes fan case 1. As illustrated in Fig. 6, motor unit 4 further includes motor 41, substrate 42, substrate guide 43, motor case 44, bottom plate 45, connector 46, and blades 47 (see Fig. 21). Fig. 21 is a schematic diagram of a vehicle according to a fourth exemplary embodiment.

Motor unit 4 is electrically connected to controller 52 (see Fig. 21) via cable 53 (see Fig. 21). Motor unit 4 is supplied with power from controller 52 via cable 53. Furthermore, motor 41 is rotationally driven on the basis of control signals from controller 52.

Motor unit 4 is used for a moving body, for example. Examples of the moving body in which motor unit 4 is used include vehicles, such as four-wheeled automobiles, two-wheeled automobiles, and three-wheeled automobiles.

### (3) Components of fan case

Hereinafter, components of fan case 1 according to the first exemplary embodiment will be described with reference to the drawings. As described above, fan case 1 includes first member 2 and second member 3 (see Fig. 1).

Fan case 1 illustrated in Fig. 1 contains blades 47 (see Fig. 21). Fan case 1 further contains motor case 44, bottom plate 45, and connector 46 illustrated in Fig. 6. Fan case 1 is formed of resin or the like.

### (3.1) First member

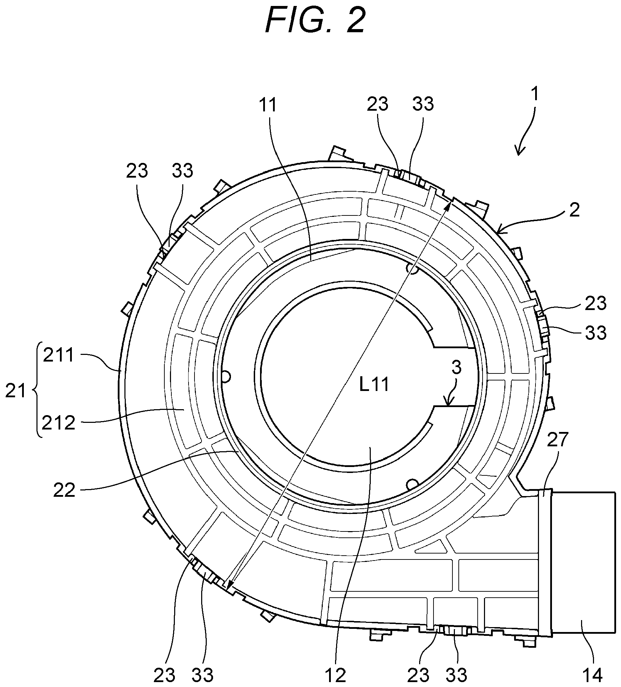

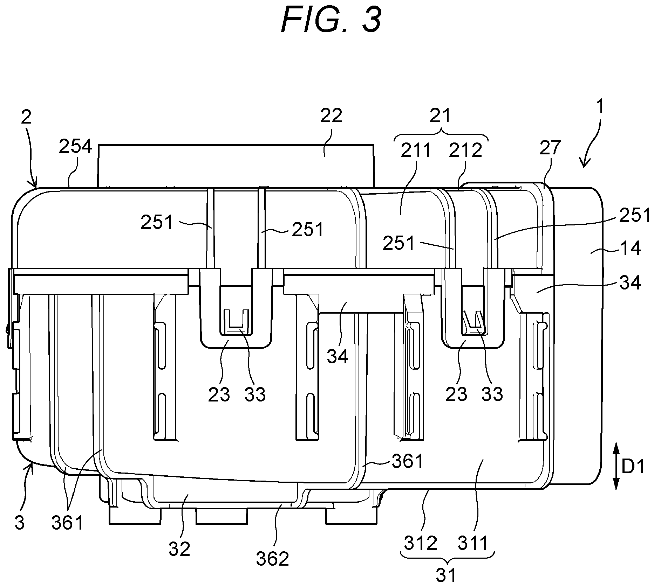

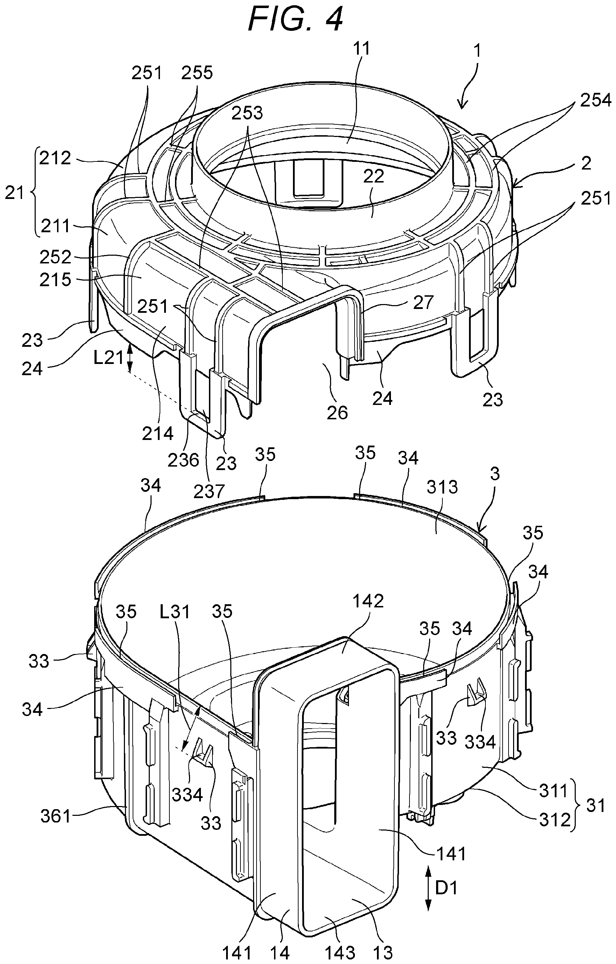

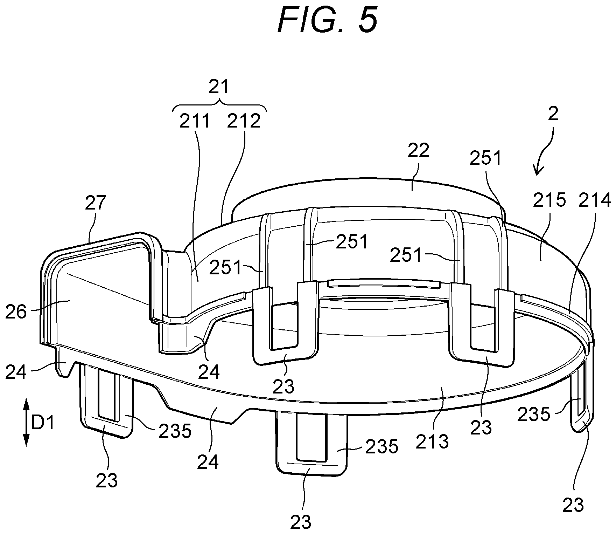

Fig. 2 is a side view of fan case 1 according to the first exemplary embodiment. Fig. 3 is a top view of fan case 1. Fig. 4 is an exploded perspective view of fan case 1. Fig. 5 is a perspective view of first member 2 of fan case 1. As illustrated in Figs. 1 to 5, first member 2 includes first main body 21, protrusion 22, a plurality of (five in the illustrated example) hooks 23, a plurality of (three in the illustrated example) flanges 24 (see Fig. 5), and a plurality of protrusions 251 to 255.

### (3.1.1) First main body

As illustrated in Figs. 1 to 5, first main body 21 has a tubular shape and has side portion 211 and annular portion 212. First main body 21 has first opening 213 (see Fig. 5). Side portion 211 has a tubular shape. Annular portion 212 protrudes inward from one end (upper end in Fig. 4) of side portion 211. More specifically, annular portion 212 protrudes inward from one end of side portion 211 to connect side portion 211 and protrusion 22. Side portion 211 and annular portion 212 are integrally formed.

### (3.1.2) Protrusion

As illustrated in Figs. 1 to 5, protrusion 22 has a tubular shape and protrudes from an end of first main body 21 along first direction D1. More specifically, protrusion 22 protrudes along first direction D1 from the inner peripheral end of annular portion 212 of first main body 21. Protrusion 22 is located around opening 11 described below.

### (3.1.3) Hooks

As illustrated in Figs. 1 to 5, the plurality of hooks 23 is disposed at a plurality of locations on the outer periphery of first main body 21 in plan view from first direction D1. More specifically, the plurality of hooks 23 is provided apart from each other along a circumferential direction of side portion 211 of first main body 21 around an end side (lower end side in Fig. 4) of side portion 211 of first main body 21. That is, the plurality of hooks 23 is provided at least a certain distance apart from each other in the circumferential direction of side portion 211.

Each of the plurality of hooks 23 extends from end 214 of first opening 213 of first main body 21 toward second member 3 along first direction D1. In the example in Fig. 4, all of the plurality of hooks 23 extends from end 214 of first opening 213 of first main body 21 toward second member 3 along first direction D1. Each hook 23 is provided at the other end (lower end in Fig. 4) of side portion 211 of first main body 21. Each hook 23 extends from end 214 of side portion 211 of first main body 21 toward second member 3 along first direction D1.

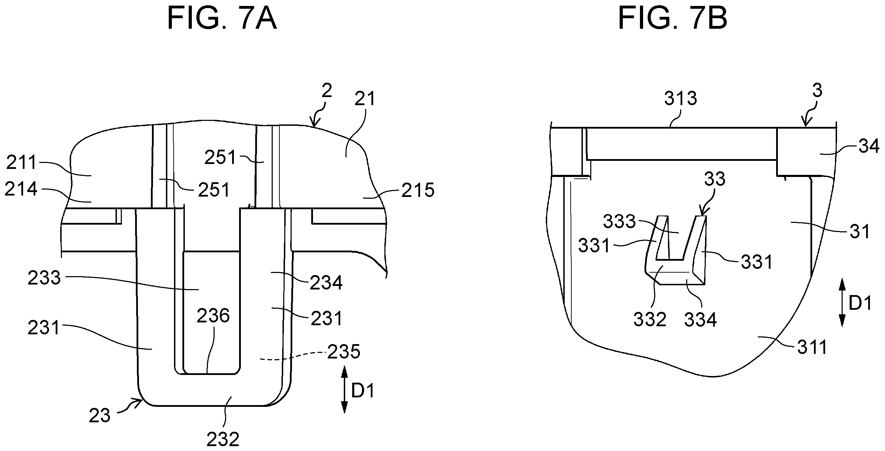

Fig. 7A is a perspective view of hook 23 of first member 2 of the fan case according to the first exemplary embodiment. As illustrated in Fig. 7A, each hook 23 has a U shape when viewed from the front of hook 23, and includes two first pieces 231 and second piece 232. Each of two first pieces 231 has a rectangular plate shape whose lengthways direction is first direction D1, and extends along first direction D1 from end 214 of side portion 211 of first main body 21. Second piece 232 has a rectangular plate shape whose lengthways direction is a direction orthogonal to first direction D1, and connects tips (lower ends in Fig. 7A) of two first pieces 231 with each other. Two first pieces 231 and second piece 232 are integrally formed. Each hook 23 has hooked hole 233 surrounded by two first pieces 231 and second piece 232.

Each of the plurality of hooks 23 has a plate shape, and has outer surface 234 and inner surface 235 facing each other in thickness directions of hook 23. Outer surface 234 and inner surface 235 of each hook 23 are curved along outer peripheral surface 215 of first main body 21 in plan view from first direction D1. More specifically, outer surface 234 and inner surface 235 of hook 23 are formed in a shape that approaches the curvature of the portion of outer peripheral surface 215 of first main body 21 where hook 23 is provided. As described above, fan case 1 can be more downsized, and the good appearance of fan case 1 can be improved.

As described above, each hook 23 has a U shape. Therefore, when first member 2 is molded, a sliding mechanism of the mold is unnecessary, and thus first member 2 is easily manufactured.

### (3.1.4) Flanges

As illustrated in Fig. 4, the plurality of flanges 24 is provided at end 214 of first opening 213 (see Fig. 5) of first main body 21. The plurality of flanges 24 is provided apart from each other along the circumferential direction of side portion 211, at end 214 of side portion 211 of first main body 21. That is, the plurality of flanges 24 is provided at least a certain distance apart from each other in the circumferential direction of side portion 211.

Each flange 24 is provided in a portion of side portion 211 where hooks 23 are not provided, in the circumferential direction of side portion 211. Flange 24 is provided, for example, between two adjacent hooks 23.

Each flange 24 extends from end 214 of first opening 213 of first main body 21 toward second member 3 along first direction D1. In the example in Fig. 4, all of the plurality of flanges 24 extends from end 214 of first opening 213 of first main body 21 toward second member 3 along first direction D1.

Each flange 24 has such a shape that the width in the circumferential direction of side portion 211 is narrower, the more apart from end 214 of side portion 211. The length of each flange 24 in first direction D1 is shorter than the length of hooks 23 in first direction D1.

Each flange 24 enters groove 35 of second member 3 when first member 2 and second member 3 are coupled. More specifically, each flange 24 enters groove 35 before first member 2 and second member 3 are coupled. As a result, first member 2 and second member 3 can be easily aligned. Therefore, first member 2 and second member 3 can be easily coupled. That is, each flange 24 functions as a guide.

### (3.1.5) Protrusions

As illustrated in Figs. 4 and 7A, in first main body 21, the plurality of protrusions 251 is provided on extension lines of hooks 23. More specifically, in first main body 21, each protrusion 251 is provided on an extension line of hook 23 in first direction D1. In first main body 21, each protrusion 251 extends along a lengthways direction of first piece 231 of hook 23. The thickness of the portion where protrusion 251 is provided is the sum of the thickness of first main body 21 and the thickness of protrusion 251, and thus is thicker than the thickness of both circumferential-direction ends of first main body 21 (the thickness of only first main body 21).

As illustrated in Fig. 4, the plurality of protrusions 252 is provided along first direction D1 in first main body 21. More specifically, each protrusion 252 is provided in parallel to protrusions 251 at a position different from the positions of protrusions 251. As illustrated in Fig. 4, the plurality of protrusions 253 is provided on annular portion 212 of first main body 21. More specifically, in annular portion 212 of first main body 21, each protrusion 253 is provided in the portion that is near exhaust port 13 when first member 2 and second member 3 are coupled. As illustrated in Fig. 4, the plurality of protrusions 254 is provided on annular portion 212 of first main body 21. More specifically, each protrusion 254 is provided along a circumferential direction of annular portion 212. As illustrated in Fig. 4, the plurality of protrusions 255 is provided on annular portion 212 of first main body 21. More specifically, each protrusion 255 is provided to connect the protrusions 254 to each other in annular portion 212.

### (3.2) Second member

As illustrated in Figs. 4 and 9, second member 3 includes second main body 31, protrusion 32, and a plurality of (for example, five) claws 33.

### (3.2.1) Second main body

As illustrated in Figs. 4 and 9, second main body 31 has a tubular shape and has side portion 311 and annular portion 312. Second main body 31 has second opening 313 (see Fig. 4). Side portion 311 has a tubular shape. Annular portion 312 protrudes inward from one end (lower end in Fig. 4 and upper end in Fig. 9) of side portion 311. More specifically, annular portion 312 protrudes inward from one end of side portion 311 to connect side portion 311 and protrusion 32. Side portion 311 and annular portion 312 are integrally formed.

### (3.2.2) Protrusion

As illustrated in Fig. 9, protrusion 32 has a tubular shape and protrudes from an end of second main body 31 along first direction D1. More specifically, protrusion 32 protrudes along first direction D1 from the inner peripheral end of annular portion 312 of second main body 31. Protrusion 32 is located around opening 12 described below.

### (3.2.3) Claws

As illustrated in Fig. 4, the plurality of claws 33 has a one-to-one correspondence with the plurality of hooks 23. The plurality of claws 33 is disposed at a plurality of locations on the outer periphery of second member 3 in plan view from first direction D1. The plurality of claws 33 is provided at an end (upper end in Fig. 4) of side portion 311 of second main body 31. More specifically, each claw 33 protrudes from side portion 311 along a direction orthogonal to both first direction D1 and a circumferential direction of side portion 311.

The plurality of claws 33 is provided apart from each other around an end side of side portion 311 of second main body 31. That is, the plurality of claws 33 is provided a certain distance apart from each other in the circumferential direction of side portion 311.

As illustrated in Fig. 7B, each claw 33 includes two first pieces 331 and second piece 332. Fig. 7B is a perspective view of claw 33 of second member 3 of fan case 1 according to the first exemplary embodiment. Each of two first pieces 331 has a plate shape whose lengthways direction is first direction D1, and protrudes outward from side portion 311 of second main body 31. Second piece 332 has a plate shape whose lengthways direction is the circumferential direction of side portion 311 of second main body 31, and protrudes outward from side portion 311. Two first pieces 331 and second piece 332 are integrally formed. Each first piece 331 has such a shape that the height is higher, the more apart from second opening 313 in first direction D1. In other words, each first piece 331 has a larger protrusion amount, the more apart from second opening 313 in first direction D1. Second piece 332 connects first-direction-D1 ends (lower ends in Fig. 7B) of two first pieces 331. Each claw 33 has recess 333 surrounded by two first pieces 331 and second piece 332.

### (3.2.4) Protrusions

As illustrated in Fig. 4, a plurality of protrusions 34 protrudes from second main body 31. More specifically, the plurality of protrusions 34 protrudes outward from side portion 311 of second main body 31. Each protrusion 34 has a shape whose lengthways direction is the circumferential direction of side portion 311, and is provided near second opening 313.

Each protrusion 34 has an L-shaped cross section when viewed from the circumferential direction of side portion 311, and each protrusion 34 and side portion 311 form groove 35.

When first member 2 is coupled to second member 3, flanges 24 of first member 2 are inserted into groove 35. Before hooks 23 of first member 2 are hooked on claws 33 of second member 3, flanges 24 are inserted into groove 35.

### (3.2.5) Protrusions

As illustrated in Figs. 4 and 9, a plurality of protrusions 361 is provided along first direction D1 in second main body 31. As illustrated in Fig. 9, a plurality of protrusions 362 is provided on protrusion 32. As illustrated in Fig. 9, a plurality of protrusions 363 is provided on annular portion 312 of second main body 31. More specifically, in annular portion 312 of second main body 31, each protrusion 363 is provided in the portion that is near exhaust port 13 when first member 2 and second member 3 are coupled.

### (3.3) Coupling between first member and second member

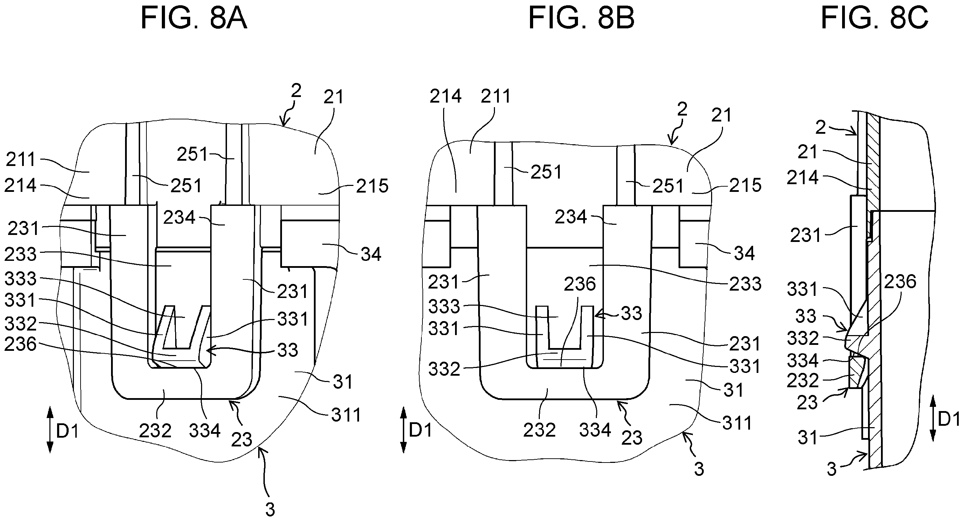

As illustrated in Figs. 1 and 8A to 8C, first member 2 and second member 3 are coupled to each other by hooking the plurality of hooks 23 on the plurality of respective claws 33. Fig. 8A is a perspective view of hook 23 and claw 33 in fan case 1 according to the first exemplary embodiment with first member 2 and second member 3 fitted to each other. Fig. 8B is a front view of hook 23 and claw 33 in fan case 1 with first member 2 and second member 3 fitted to each other. Fig. 8C is a side view of hook 23 and claw 33 in fan case 1 with first member 2 and second member 3 fitted to each other.

First member 2 and second member 3 are separated from each other before the coupling (a state illustrated in Fig. 4). When first member 2 is brought closer to second member 3 from the above state, hooks 23 of first member 2 come into contact with claws 33 of second member 3. Specifically, second pieces 232 of hooks 23 come into contact with first pieces 331 of claws 33. Subsequently, when first member 2 is brought closer to second member 3, hooks 23 are bent outward by claws 33. First pieces 331 of claws 33 have larger protrusion amounts, the more apart from second opening 313. Therefore, first pieces 231 of hooks 23 become more and more bent. When first member 2 is further brought closer to second member 3, second pieces 232 of hooks 23 climb over claws 33. At this time, claws 33 are located in hooked holes 233 of hooks 23. Hooks 23 return to the original state from the outward bent state. Through the above steps, first member 2 and second member 3 are coupled.

As described above, as illustrated in Fig. 8C, each hook 23 extends from end 214 of first opening 213 of first main body 21 toward second member 3 along first direction D1. In other words, each hook 23 reduces outward (outward orthogonal to first direction D1) bulging of first main body 21. Specifically, in a portion of each hook 23 on the root side (first main body 21 side), there is no portion that protrudes outward from first main body 21 and bends downward. First pieces 231 of each hook 23 do not protrude to the outside of first main body 21 (the left side in Fig. 8C), but extend downward.

As described above, as illustrated in Fig. 8C, the protrusion amounts (protrusion amounts in a left-right direction in Fig. 8C) of hooks 23 and claws 33 can be reduced. As a result, as illustrated in Fig. 2, outer diameter L11 of fan case 1 can be shortened in plan view from first direction D1. That is, fan case 1 can be downsized.

Since all of the plurality of hooks 23 and all of the plurality of claws 33 are coupled, first member 2 and second member 3 can be more firmly coupled while fan case 1 can be downsized.

As illustrated in Figs. 1, 2, 7A, and 7B, in fan case 1 according to the first exemplary embodiment, outer surfaces 234 and inner surfaces 235 of the plurality of hooks 23 are along outer peripheral surface 215 of first main body 21 in plan view from first direction D1. As a result, fan case 1 can be downsized, and the good appearance of fan case 1 can be improved. In addition, the thickness of hook 23 is easily made relatively uniform. Specifically, the thickness of hook 23 can be made constant and about 2 mm. As a result, first member 2 having hooks 23 is easily manufactured. In fan case 1, the constant thickness of hook 23 is not essential.

As illustrated in Fig. 4, first distance L21 between the tip of flange 24 and first hooked portion 236 of hook 23 is shorter in first direction D1 than second distance L31 between second opening 313 of second main body 31 and second hooked portion 334 of claw 33. First hooked portion 236 is a portion on which claw 33 is hooked. Second hooked portion 334 is a portion on which hook 23 is hooked. As a result, since the function as a guide can be enhanced when first member 2 and second member 3 are coupled, first member 2 and second member 3 can be easily coupled.

In a state where first member 2 and second member 3 are coupled, the tips of claws 33 of second member 3 are along outer peripheral surface 215 of first main body 21 in plan view from first direction D1. That is, the most protruding portions of claws 33 are along outer peripheral surface 215. More specifically, second piece 332 of claw 33 is formed in a shape that approaches the curvature of the portion of outer peripheral surface 215 of first main body 21 where corresponding hook 23 is provided. As a result, fan case 1 can be downsized, and the good appearance of fan case 1 can be improved.

Further, first main body 21 has outer peripheral surface 215 including a plurality of regions having different curvatures. The outer surfaces 234 of the plurality of hooks 23 are curved along outer peripheral surface 215 of first main body 21 in plan view from first direction D1. That is, the plurality of hooks 23 has different shapes depending on the shapes of the locations in first main body 21 where the plurality of hooks 23 is provided. As a result, fan case 1 can be downsized, and the good appearance of fan case 1 can be improved.

Each hook 23 is provided apart from flanges 24. As a result, even if stress is applied to hook 23 due to bending of hook 23, the stress of hook 23 can be prevented from affecting flanges 24.

### (3.4) Openings

As illustrated in Figs. 1 and 9, fan case 1 has two openings 11, 12. More specifically, first member 2 has opening 11, and second member 3 has opening 12. Opening 11 is formed at one first-direction-D1 end (upper end in Fig. 1) of first member 2, and has an opening plane whose normal line is first direction D1. Opening 12 is formed at one first-direction-D1 end (upper end in Fig. 9) of second member 3, and has an opening plane whose normal line is first direction D1. When fan case 1 contains bottom plate 45, part of bottom plate 45 fits in opening 12.

### (3.5) Outer peripheral flange of exhaust port

As illustrated in Figs. 1 and 4, fan case 1 includes outer peripheral flange 14 of exhaust port 13 for exhaust. More specifically, in fan case 1 according to the first exemplary embodiment, second member 3 includes outer peripheral flange 14. Exhaust port 13 has an opening plane whose normal line is a direction orthogonal to first direction D1.

Outer peripheral flange 14 has a frame shape and includes two first pieces 141, second piece 142, and third piece 143. In the first exemplary embodiment, two first pieces 141, second piece 142, and third piece 143 are integrally formed. Two first pieces 141 face each other in a direction orthogonal to both first direction D1 and a normal direction of the opening plane of exhaust port 13. Each first piece 141 has a rectangular plate shape whose lengthways direction is first direction D1. Second piece 142 has a rectangular plate shape whose lengthways direction is a direction orthogonal to both first direction D1 and the normal direction of the opening plane of exhaust port 13. Third piece 143 is located below second piece 142 and has a rectangular plate shape whose lengthways direction is a direction orthogonal to both first direction D1 and the normal direction of the opening plane of exhaust port 13.

When first member 2 and second member 3 are coupled, first member 2 can be brought closer to second member 3 such that end 27 of first member 2 is along second piece 142 and upper portions of first pieces 141 of outer peripheral flange 14. As a result, since the function as a guide can be enhanced when first member 2 and second member 3 are coupled, first member 2 and second member 3 can be easily coupled. Before hooks 23 of first member 2 climb claws 33 of second member 3, first member 2 can be aligned with second member 3 with outer peripheral flange 14.

Note that first member 2 may have an outer peripheral flange. Even in this case, when first member 2 and second member 3 are coupled, first member 2 can be brought closer to second member 3 such that an end of the second member is along the outer peripheral flange. As a result, the function as a guide can be enhanced when first member 2 and second member 3 are coupled.

### (3.6) Restriction portion

Restriction portion 37 illustrated in Fig. 9 is in contact with connector 46 to restrict the movement of connector 46 with respect to substrate 42 (see Fig. 6).

As illustrated in Fig. 9, restriction portion 37 includes protrusion 371. Protrusion 371 is formed of resin or the like. Protrusion 371 protrudes from part of second main body 31 and faces connector 46. More specifically, protrusion 371 protrudes along first direction D1 from part of annular portion 312 of second main body 31, and faces connector 46 via a gap in first direction D1. Protrusion 371 is formed of, for example, resin integrally with second main body 31. When a force is applied to connector 46 in first direction D1 toward protrusion 371 (downward in Fig. 9), connector 46 comes into contact with protrusion 371. When connector 46 comes into contact with protrusion 371, connector 46 cannot move further downward. As a result, the downward movement of connector 46 can be restricted.

### (4) Components of motor unit

Hereinafter, components of motor unit 4 according to the first exemplary embodiment will be described with reference to the drawings.

### (4.1) Motor

As illustrated in Fig. 6, motor 41 is contained in motor case 44. In motor 41, rotor 411 including rotating shaft 413 extending in an axial direction (first direction D1) rotates on the axial center of rotating shaft 413. That is, motor 41 rotates with first direction D 1 as the axial direction. Motor 41 is, for example, an inner rotor type motor as illustrated in Fig. 6. Motor 41 is directly or indirectly connected to blades 47 (see Fig. 21), and blades 47 rotate in conjunction with rotation of motor 41. Note that motor 41 is not limited to the inner rotor type motor, and may be an outer rotor type motor.

### (4.2) Substrate

Substrate 42 illustrated in Fig. 6 is, for example, a printed substrate. Substrate 42 is formed in a substantially circular shape in plan view from a thickness direction of substrate 42, and has through-hole 421 in the central portion. Rotating shaft 413 is through through-hole 421. Substrate 42 further has a plurality of (three in the illustrated example) mounting holes 422. Substrate 42 held by substrate guide 43 is contained in motor case 44.

Substrate 42 is provided with a plurality of circuit elements for driving motor 41. The plurality of circuit elements provided on substrate 42 constitutes driving circuit 48 (see Fig. 21) that drives motor 41. Driving circuit 48 is electrically connected to motor 41 via an electrical path, such as a lead wire. Driving circuit 48 generates driving power for driving motor 41 from power supplied from controller 52 (see Fig. 21) via connector 46 and cable 53 (see Fig. 21). Driving circuit 48 supplies the generated driving power to motor 41. Motor 41 is driven and rotated by the driving power supplied from driving circuit 48.

### (4.3) Substrate guide

As illustrated in Fig. 6, substrate guide 43 is formed in an annular shape having opening 431 in the central portion, and substrate 42 is disposed on a surface of substrate guide 43 on one first-direction-D1 side. Substrate guide 43 holds substrate 42 between bottom plate 45 and substrate guide 43 in first direction D1. A plurality of (three in the illustrated example) protrusions 432 is formed on the outer periphery of a surface of substrate guide 43 on the substrate 42 side. Each protrusion 432 is formed in a columnar shape and protrudes along first direction D1. Each protrusion 432 is thermally fastened through mounting hole 422 that is circular and formed through substrate 42. As a result, substrate 42 is fixed to substrate guide 43. In substrate guide 43, a plurality of (three in the illustrated example) insertion holes 433 is also formed in the outer periphery of opening 431. A lead wire for connecting motor 41 with substrate 42 is through each insertion hole 433.

### (4.4) Motor case

As illustrated in Fig. 6, motor case 44 is a metal member formed in a bottomed cylindrical shape in which one first-direction-D 1 side (upper side in Fig. 6) of motor case 44 is open. Motor case 44 contains motor 41 therein. Motor case 44 holds substrate 42. Motor case 44 holds substrate 42 via substrate guide 43.

Motor case 44 has bottom surface portion 441, tubular portion 442, annular portion 443, tubular portion 444, and distal end 445. Bottom surface portion 441, tubular portion 442, annular portion 443, tubular portion 444, and distal end 445 are integrally formed. Bottom surface portion 441 has, for example, a disk shape. Tubular portion 442 protrudes from the outer peripheral edge of bottom surface portion 441. Annular portion 443 is provided at the tip of tubular portion 442. Tubular portion 444 protrudes from the outer peripheral edge of annular portion 443. Distal end 445 is provided at the tip of tubular portion 444. Distal end 445 has a plurality of (two in the illustrated example) through-holes 446 and a plurality of (three in the illustrated example) through-holes 447.

### (4.5) Bottom plate

As illustrated in Fig. 6, bottom plate 45 is a metal member formed in a bottomed cylindrical shape in which one first-direction-D1 side (lower side in Fig. 6) is open.

Bottom plate 45 has bottom surface portion 451, tubular portion 452, and distal end 453. Bottom surface portion 451, tubular portion 452, and distal end 453 are integrally formed. Bottom surface portion 451 has, for example, a disk shape. Tubular portion 452 protrudes from the outer peripheral edge of bottom surface portion 451. Distal end 453 is provided at the tip of tubular portion 452. Distal end 453 has a plurality of through-holes 454 (only one of which is illustrated in Fig. 6) and a plurality of (three in the illustrated example) through-holes 455.

Bottom plate 45 is attached to motor case 44 to cover the opening of motor case 44. More specifically, screws are inserted into the plurality of through-holes 446 of motor case 44 and the plurality of through-holes 454 of bottom plate 45 to fix motor case 44 and bottom plate 45 together with the screws.

In a state where motor case 44 and bottom plate 45 have been fixed together, screws 49 (see Fig. 9) are inserted into the plurality of through-holes 447 of motor case 44, the plurality of through-holes 455 of bottom plate 45, and a plurality of through-holes of fan case 1 to attach motor case 44 and bottom plate 45 to fan case 1.

### (4.6) Connector

Connector 46 illustrated in Fig. 6 is a connection member for electrically connecting substrate 42 and cable 53 (see Fig. 21). Connector 46 is an insertion mounting type connector, and insertion and removal directions of connector 46 are along a direction orthogonal to first direction D1.

As illustrated in Fig. 6, connector 46 includes container 461 and a plurality of connection terminals (not illustrated) inside container 461. The plurality of connection terminals is electrically connected to substrate 42 and cable 53. The plurality of connection terminals is made of, for example, metal, such as brass.

Container 461 is, for example, a resin molded product made of polybutyleneterephthalate (PBT) or the like. Container 461 is formed integrally with substrate guide 43. Container 461 is formed in a rectangular tubular shape having containing hole 462. Containing hole 462 has an opening plane formed in a rectangular shape. A connector of cable 53 is inserted into containing hole 462. As a result, the plurality of connection terminals and cable 53 are electrically connected.

### (4.7) Blades

Blades 47 (see Fig. 21) are rotated by motor 41 illustrated in Fig. 6. More specifically, blades 47 directly or indirectly connected to motor 41 are contained in fan case 1 (see Fig. 9). For example, blades 47 are attached to part of rotating shaft 413 protruding from motor case 44. In fan case 1, blades 47 rotate in conjunction with rotation of motor 41. As a result, the cooling effect can be enhanced.

### (5) Advantageous effects

In fan case 1 according to the first exemplary embodiment, in first member 2, at least one of at least one hook 23 extends from an end of first opening 213 of first main body 21 toward second member 3 along first direction D1. As a result, in plan view from first direction D1, the protrusion amounts of hooks 23 and claws 33 in a direction orthogonal to first direction D1 can be reduced, and thus fan case 1 can be downsized.

In fan case 1 according to the first exemplary embodiment, the plurality of hooks 23 is hooked on the plurality of respective claws 33 to couple first member 2 and second member 3 to each other. As a result, first member 2 and second member 3 can be more firmly coupled to each other by hooking hooks 23 on claws 33 at a plurality of places while fan case 1 can be downsized.

In fan case 1 according to the first exemplary embodiment, at least one of outer surface 234 and inner surface 235 of each of at least one hook 23 is along outer peripheral surface 215 of first main body 21 in plan view from first direction D1. As a result, fan case 1 is downsized, and the thickness of hook 23 is easily made relatively uniform. Since outer surface 234 is along outer peripheral surface 215 of first main body 21, the good appearance of fan case 1 can be improved.

In fan case 1 according to the first exemplary embodiment, outer surfaces 234 of hooks 23 are curved along outer peripheral surface 215 of first main body 21 in plan view from first direction D1. As a result, fan case 1 can be more downsized, and the good appearance of fan case 1 can be improved.

In fan case 1 according to the first exemplary embodiment, protrusions 251 are provided on extension lines of hooks 23 at end 214 of first opening 213 of first main body 21. As a result, since the portions on the extension lines of hooks 23 can be made thicker than both circumferential-direction ends of first main body 21, resistance to a force that acts on first main body 21 when hook 23 is bent can be improved.

In fan case 1 according to the first exemplary embodiment, first distance L21 between flange 24 and first hooked portion 236 of hook 23 is shorter in first direction D1 than second distance L31 between second opening 313 of second main body 31 and second hooked portion 334 of claw 33. As a result, since the function as a guide can be enhanced when first member 2 and second member 3 are coupled, first member 2 and second member 3 can be easily coupled.

In fan case 1 according to the first exemplary embodiment, first member 2 or second member 3 includes outer peripheral flange 14 of exhaust port 13. As a result, the function as a guide can be enhanced when first member 2 and second member 3 are coupled. Therefore, first member 2 and second member 3 can be easily coupled.

In fan case 1 according to the first exemplary embodiment, the tips of claws 33 are along outer peripheral surface 215 of first main body 21 in plan view from first direction D1. As a result, fan case 1 can be downsized, and the good appearance of fan case 1 can be improved.

In fan case 1 according to the first exemplary embodiment, first main body 21 has outer peripheral surface 215 including a plurality of regions having different curvatures, and the plurality of hooks 23 is along outer peripheral surface 215 of first main body 21. As a result, fan case 1 can be downsized, and the good appearance of fan case 1 can be improved.

### (6) Modifications

Hereinafter, modifications of the first exemplary embodiment will be described.

As a modification of the first exemplary embodiment, outer surfaces 234 of the plurality of hooks 23 may be flat.

As a modification of the first exemplary embodiment, all of the plurality of hooks 23 do not necessarily extend along first direction D 1, and only part of the plurality of hooks 23 may extend along first direction D 1. In short, at least one of the plurality of hooks 23 may extend from end 214 of first opening 213 of first main body 21 toward second member 3 along first direction D1.

As a modification of the first exemplary embodiment, only outer surfaces 234 or only inner surfaces 235 of the plurality of hooks 23 may be along outer peripheral surface 215 of first main body 21 in plan view from first direction D1. Specifically, with respect to each hook 23, outer surface 234 may be along outer peripheral surface 215 and inner surface 235 may be a plane, or outer surface 234 may be a plane and inner surface 235 may be along outer peripheral surface 215. Also in the present modifications, fan case 1 can be more downsized, and the good appearance of fan case 1 can be improved.

In the first exemplary embodiment, motor case 44 is made of metal, but whole motor case 44 is not necessarily a metal portion. As a modification of the first exemplary embodiment, only part of motor case 44 may be a metal portion. In short, motor case 44 preferably includes a metal portion.

For example, motor case 44 includes a resin member and a metal member. Motor case 44 holds substrate 42 with the resin member. The resin member holds substrate 42 directly or via substrate guide 43. The metal member is provided around the resin member. As a result, in motor case 44, a shielding effect can be enhanced by the metal member while substrate 42 is held by the resin member.

Fan case 1 and motor unit 4 according to the modification described above also have effects similar to those of fan case 1 and motor unit 4 according to the first exemplary embodiment.

### (Second exemplary embodiment)

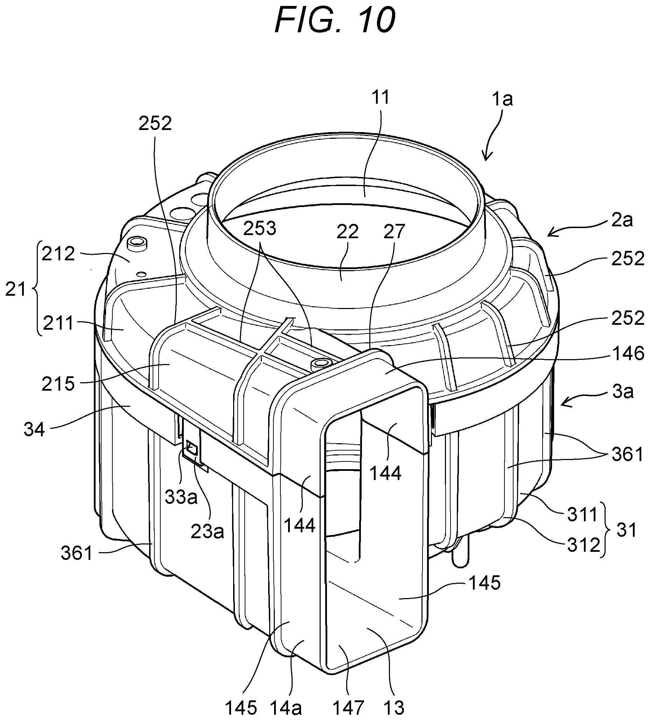

Fig. 10 is a perspective view of fan case 1a according to a second exemplary embodiment. Fan case 1a according to the second exemplary embodiment is different from fan case 1 according to the first exemplary embodiment (see Fig. 1) in that fan case 1a according to the second exemplary embodiment includes a plurality of hooks 23a (only one of which is illustrated in Fig. 10) and a plurality of claws 33a as illustrated in Fig. 10.

### (1) Configuration

As illustrated in Fig. 10, fan case 1a according to the second exemplary embodiment includes first member 2a and second member 3a. Note that with respect to fan case 1a according to the second exemplary embodiment, components similar to those of fan case 1 according to the first exemplary embodiment are denoted by the same reference marks, and the description thereof will be omitted.

Similarly to motor unit 4 according to the first exemplary embodiment, motor unit 4 according to the second exemplary embodiment includes fan case 1a, and is used for a moving body, such as a vehicle.

### (2) Components of fan case

### (2.1) First member

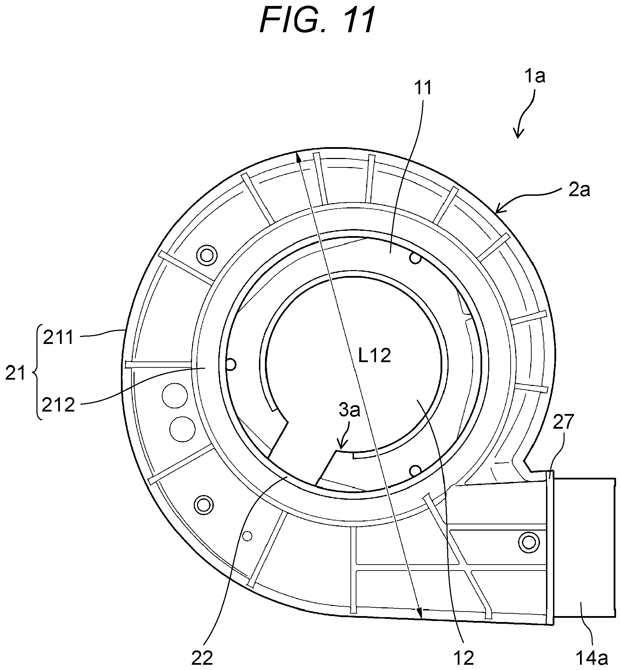

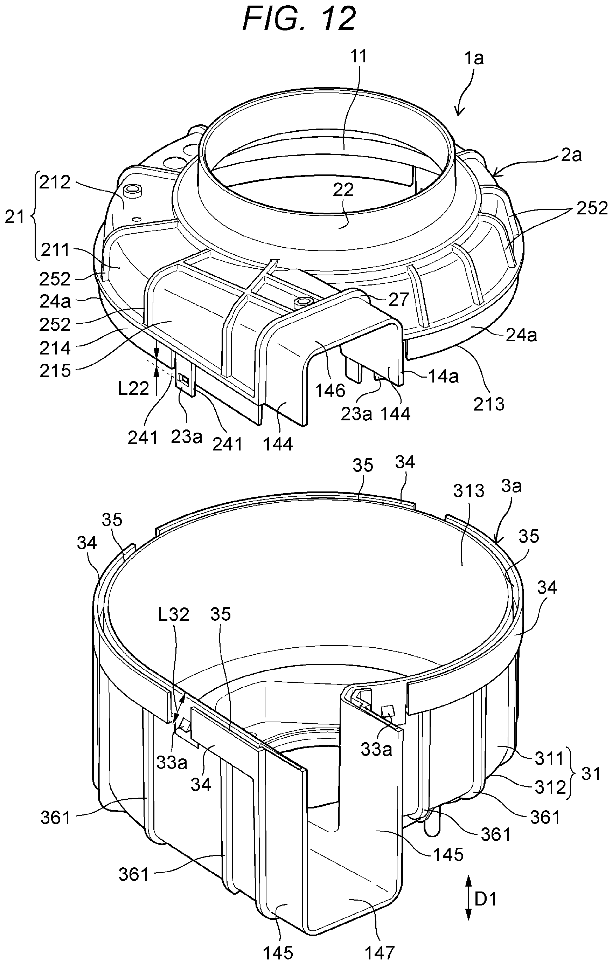

As illustrated in Figs. 10 to 12, first member 2a includes first main body 21, protrusion 22, a plurality of hooks 23a (only one of which is illustrated in Fig. 10), a plurality of flanges 24a, and a plurality of protrusions 252, 253, similarly to first member 2 of the first exemplary embodiment (see Figs. 1 to 5). Fig. 11 is a top view of fan case 1a1a according to the second exemplary embodiment. Fig. 12 is an exploded perspective view of the fan case.

### (2.1.1) Hooks

Similarly to the plurality of hooks 23 of the first exemplary embodiment (see Fig. 1), the plurality of hooks 23a illustrated in Figs. 10 and 12 is disposed at a plurality of locations on the outer periphery of first main body 21 in plan view from first direction D1. More specifically, the plurality of hooks 23a is provided apart from each other along a circumferential direction of side portion 211 of first main body 21 around the other end side (lower end side in Fig. 12) of side portion 211 of first main body 21. That is, the plurality of hooks 23a is provided at least a certain distance apart from each other in the circumferential direction of side portion 211.

The plurality of hooks 23a extends from end 214 of first opening 213 of first main body 21 toward second member 3a along first direction D1. In the example in Figs. 10 to 12, all of the plurality of hooks 23a extends from end 214 of first opening 213 of first main body 21 toward second member 3a along first direction D1. Each hook 23a is provided at the other end (lower end in Fig. 12) of side portion 211 of first main body 21. Each hook 23a extends from end 214 of side portion 211 of first main body 21 toward second member 3a along first direction D1.

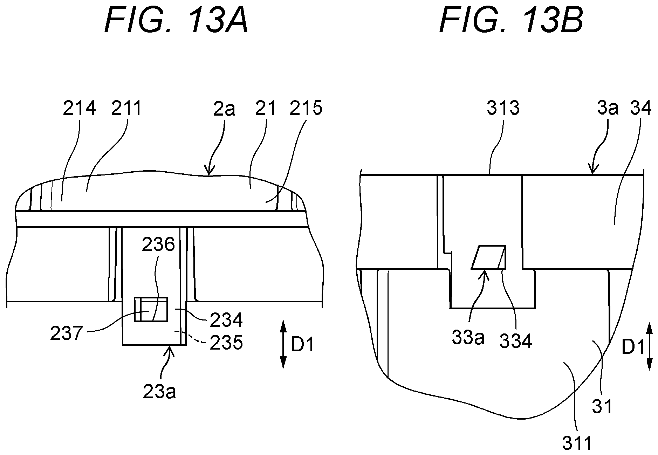

Fig. 13A is a perspective view of hook 23a of first member 2a of fan case 1a according to the second exemplary embodiment. As illustrated in Fig. 13A, each hook 23a has hooked hole 237. Hooked hole 237 is formed at a lower portion of hook 23a. Each hook 23a has a plate shape, and has outer surface 234 and inner surface 235 facing each other in thickness directions of hook 23a. Outer surface 234 and inner surface 235 of each hook 23a are flat. That is, no large projection or the like is formed on outer surface 234 and inner surface 235 of each hook 23a.

### (2.1.2) Flanges

As illustrated in Fig. 12, the plurality of flanges 24a is provided at end 214 of first opening 213 of first main body 21. The plurality of flanges 24a is provided apart from each other along the circumferential direction of side portion 211, at end 214 of side portion 211 of first main body 21. That is, the plurality of flanges 24a is provided at least a certain distance apart from each other in the circumferential direction of side portion 211.

Each flange 24a is provided in a portion of side portion 211 where hooks 23a are not provided, in the circumferential direction of side portion 211. Flange 24a is provided, for example, between two adjacent hooks 23a. At this time, flange 24a is provided at end 214 of first opening 213 such that gap 241 is generated between flange 24a and hook 23a in the circumferential direction of first main body 21.

Each flange 24a extends from end 214 of first opening 213 of first main body 21 toward second member 3a along first direction D1. In the example in Fig. 12, all of the plurality of flanges 24a extends from end 214 of first opening 213 of first main body 21 toward second member 3a along first direction D1.

In a circumferential direction of side portion 311 of second main body 31, flanges 24a have substantially the same length in first direction D1. The length of each flange 24a in first direction D1 is shorter than the length of hooks 23a in first direction D1.

Similarly to flanges 24 (see Fig. 4) of the first exemplary embodiment, each flange 24a enters groove 35 of second member 3a when first member 2a and second member 3a are coupled. More specifically, each flange 24a enters groove 35 before first member 2a and second member 3a are coupled. As a result, since first member 2a and second member 3a can be easily aligned, first member 2a and second member 3a can be easily coupled. That is, each flange 24a functions as a guide.

### (2.2) Second member

As illustrated in Figs. 10 and 12, second member 3a includes second main body 31, protrusion 32, and a plurality of claws 33a (only one of which is illustrated in Fig. 10), similarly to second member 3 of the first exemplary embodiment (see Figs. 4 and 9).

### (2.2.1) Claws

As illustrated in Fig. 12, the plurality of claws 33a has a one-to-one correspondence with the plurality of hooks 23a. The plurality of claws 33a is disposed at a plurality of locations on the outer periphery of second member 3a in plan view from first direction D1. The plurality of claws 33a is provided at an end (upper end in Fig. 12) of side portion 311 of second main body 31. More specifically, each claw 33a protrudes from side portion 311 along a direction orthogonal to both first direction D1 and the circumferential direction of side portion 311.

The plurality of claws 33a is provided apart from each other around an end side of side portion 311 of second main body 31. That is, the plurality of claws 33a is provided a certain distance apart from each other in the circumferential direction of side portion 311.

Fig. 13B is a perspective view of claw 33a of second member 3a of fan case 1a according to the second exemplary embodiment. As illustrated in Fig. 13B, each claw 33a has such a shape that the height is higher, the more apart from second opening 313 in first direction D1. That is, when viewed from the circumferential direction of side portion 311 of second main body 31, each claw 33a has a triangular shape.

### (2.3) Coupling between first member and second member

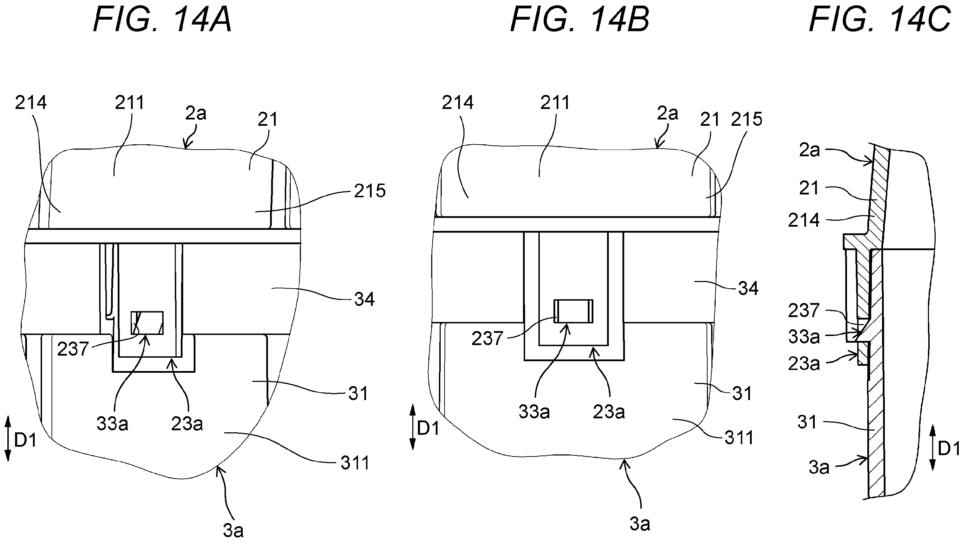

Fig. 14A is a perspective view of hook 23a and claw 33a in fan case 1a according to the second exemplary embodiment with first member 2a and second member 3a fitted to each other. Fig. 14B is a front view of hook 23a and claw 33a in fan case 1a with first member 2a and second member 3a fitted to each other. Fig. 14C is a side view of hook 23a and claw 33a in fan case 1a with first member 2a and second member 3a fitted to each other. As illustrated in Figs. 10 and 14A to 14C, first member 2a and second member 3a are coupled to each other by hooking the plurality of hooks 23a on the plurality of respective claws 33a.

First member 2a and second member 3a are separated from each other before the coupling (a state illustrated in Fig. 12). When first member 2a is brought closer to second member 3a from the above state, hooks 23a of first member 2a come into contact with claws 33a of second member 3a. Specifically, the tips of hooks 23a come into contact with claws 33a. Subsequently, when first member 2a is brought closer to second member 3a, hooks 23a are bent outward by claws 33a. Claws 33a have larger protrusion amounts, the more apart from second opening 313. Therefore, hooks 23a become more and more bent. When first member 2a is further brought closer to second member 3a, the tips of hooks 23a climb over claws 33a. At this time, claws 33a are located in hooked holes 237 of hooks 23a. Hooks 23a return to the original state from the outward bent state. Through the above steps, first member 2a and second member 3a are coupled.

As described above, as illustrated in Fig. 14C, each hook 23a extends from end 214 of first opening 213 of first main body 21 toward second member 3a along first direction D1. In other words, each hook 23a reduces outward (outward orthogonal to first direction D1) bulging of first main body 21. Each hook 23a does not protrude to the outside of first main body 21 (the left side in Fig. 14C) but extends downward.

As described above, as illustrated in Fig. 14C, the protrusion amounts (protrusion amounts in a left-right direction in Fig. 14C) of hooks 23a and claws 33a can be reduced. As a result, as illustrated in Fig. 11, outer diameter L12 of fan case 1a can be shortened in plan view from first direction D1. That is, fan case 1a can be downsized.

Since similarly to the first exemplary embodiment, all of the plurality of hooks 23a and all of the plurality of claws 33a are coupled, first member 2a and second member 3a can be more firmly coupled while fan case 1a can be downsized.

Hooks 23a and claws 33a are located inside the outermost portion of first main body 21 in plan view from first direction D1. In first main body 21, the portions where hooks 23a are provided are located inside the outermost portion of the portion except the portions where hooks 23a are provided. As a result, fan case 1a can be more downsized.

### (2.4) Outer peripheral flange of exhaust port

As illustrated in Figs. 10 and 12, fan case 1a includes outer peripheral flange 14a of exhaust port 13 for exhaust. More specifically, in fan case 1a according to the second exemplary embodiment, first member 2a includes part of outer peripheral flange 14a. Second member 3a includes the rest of outer peripheral flange 14a. Exhaust port 13 has an opening plane whose normal line is a direction orthogonal to first direction D1.

Outer peripheral flange 14a has a frame shape. Outer peripheral flange 14a includes two first pieces 144, two second pieces 145, third piece 146, and fourth piece 147. In the second exemplary embodiment, two first pieces 144 and third piece 146 are integrally formed. Two second pieces 145 and fourth piece 147 are integrally formed.

Two first pieces 144 face each other in a direction orthogonal to both first direction D1 and a normal direction of the opening plane of exhaust port 13. Each first piece 144 has a rectangular plate shape whose lengthways direction is first direction D1. Third piece 146 has a rectangular plate shape whose lengthways direction is a direction orthogonal to both first direction D1 and the normal direction of the opening plane of exhaust port 13. Third piece 146 connects two first pieces 144.

Two second pieces 145 face each other in a direction orthogonal to both first direction D1 and the normal direction of the opening plane of exhaust port 13. Each second piece 145 has a rectangular plate shape whose lengthways direction is first direction D1. Fourth piece 147 is located below third piece 146 and has a rectangular plate shape whose lengthways direction is a direction orthogonal to both first direction D1 and the normal direction of the opening plane of exhaust port 13. Fourth piece 147 connects two second pieces 145.

When first member 2a and second member 3a are coupled, two first pieces 144 and third piece 146 of first member 2a and two second pieces 145 and fourth piece 147 of second member 3a integrate into outer peripheral flange 14a.

### (3) Advantageous effects

In fan case 1a according to the second exemplary embodiment, outer surfaces 234 of hooks 23a are flat. As a result, hooks 23a can be easily formed.

In fan case 1a according to the second exemplary embodiment, flanges 24a are provided at end 214 of first opening 213 of first main body 21 such that gaps 241 are generated between flanges 24a and hooks 23a in the circumferential direction of first main body 21. As a result, first member 2a and second member 3a can be easily coupled. Furthermore, since flanges 24a are provided apart from hooks 23a, stress due to bending of hooks 23a can be made less likely to be transmitted to flanges 24a.

In fan case 1a according to the second exemplary embodiment, hooks 23a and claws 33a are located inside the outermost portion of first main body 21 in plan view from first direction D1. As a result, fan case 1a can be more downsized.

### (4) Modifications

As a modification of the second exemplary embodiment, all of the plurality of hooks 23a do not necessarily extend along first direction D1, and only part of the plurality of hooks 23a may extend along first direction D1. In short, at least one of the plurality of hooks 23a may extend from end 214 of first opening 213 of first main body 21 toward second member 3a along first direction D1.

As a modification of the second exemplary embodiment, outer surfaces 234 of the plurality of hooks 23a may be along outer peripheral surface 215 of first main body 21 in plan view from first direction D1. As a result, the size can be more reduced, and the good appearance can be improved.

A modification of the first exemplary embodiment may be applied to fan case 1a according to the second exemplary embodiment.

Fan cases 1a according to the modifications described above also have effects similar to those of fan case 1a according to the second exemplary embodiment.

### (Third exemplary embodiment)

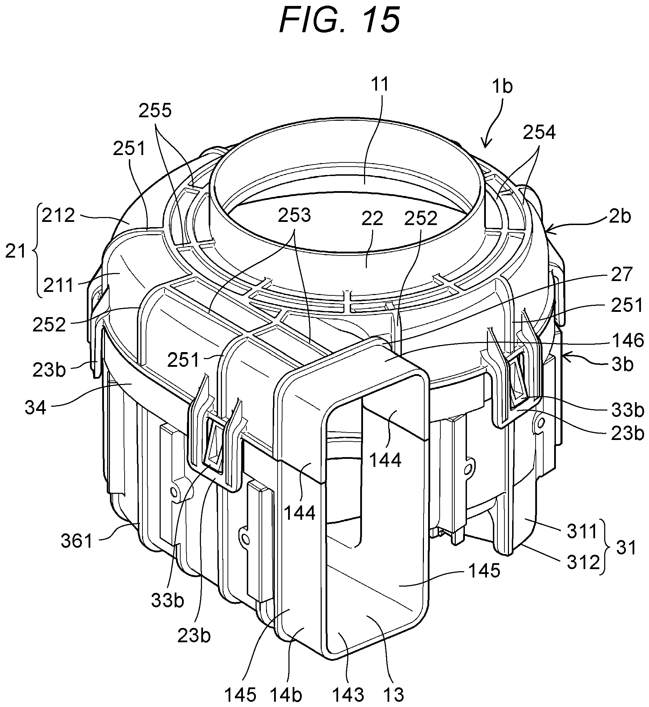

Fig. 15 is a perspective view of a fan case according to a third exemplary embodiment. As illustrated in Fig. 15, fan case 1b is different from fan case 1 according to the first exemplary embodiment (see Fig. 1) in that fan case 1b includes a plurality of hooks 23b and a plurality of claws 33b.

### (1) Fan case

As illustrated in Fig. 15, fan case 1b includes first member 2b and second member 3b. With respect to fan case 1b, components similar to those of fan case 1 according to the first exemplary embodiment are denoted by the same reference marks, and the description thereof will be omitted.

Similarly to motor unit 4 according to the first exemplary embodiment, motor unit 4 including fan case 1b is used for a moving body, such as a vehicle.

### (2) Components of fan case

### (2.1) First member

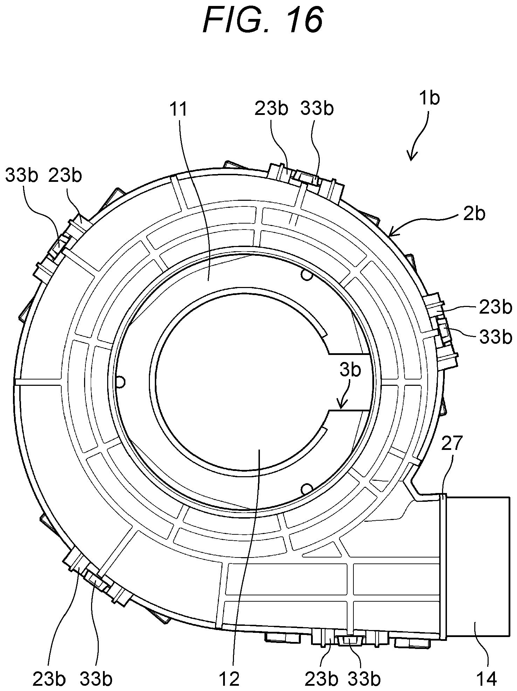

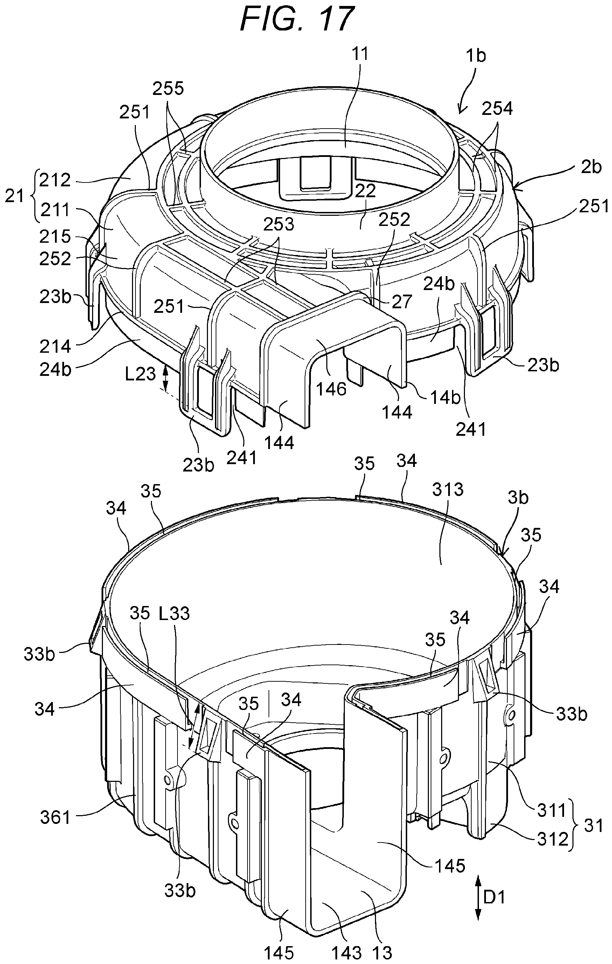

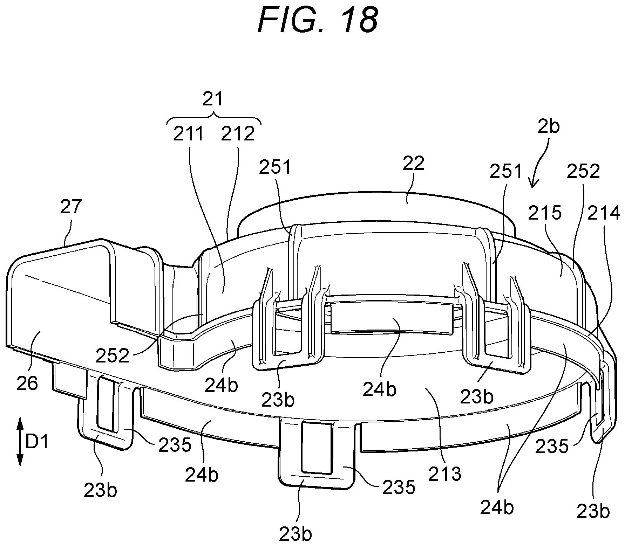

Fig. 16 is a top view of fan case 1b according to the third exemplary embodiment. Fig. 17 is an exploded perspective view of fan case 1b. Fig. 18 is a perspective view of first member 2b of fan case 1b. As illustrated in Figs. 15 to 18, first member 2b includes first main body 21, protrusion 22, a plurality of hooks 23b (only three of which are illustrated in Fig. 15), a plurality of flanges 24b, and a plurality of protrusions 251 to 255.

### (2.1.1) Hooks

Similarly to the plurality of hooks 23 of the first exemplary embodiment (see Fig. 1), the plurality of hooks 23b illustrated in Figs. 15 to 18 is disposed at a plurality of locations on the outer periphery of first main body 21 in plan view from first direction D1. More specifically, the plurality of hooks 23b is provided apart from each other along a circumferential direction of side portion 211 of first main body 21 around the other end side (lower end side in Fig. 17) of side portion 211 of first main body 21. That is, the plurality of hooks 23b is provided at least a certain distance apart from each other in the circumferential direction of side portion 211.

The plurality of hooks 23b extends from end 214 of first opening 213 of first main body 21 toward second member 3b along first direction D1. In the example in Figs. 15 to 18, all of the plurality of hooks 23b extends from end 214 of first opening 213 of first main body 21 toward second member 3b along first direction D1. Each hook 23b is provided at the other end (lower end in Fig. 17) of side portion 211 of first main body 21. Each hook 23b extends from end 214 of side portion 211 of first main body 21 toward second member 3b along first direction D1.

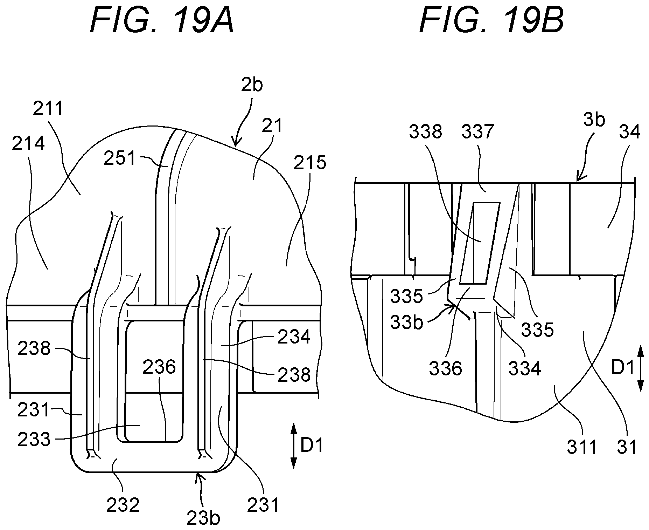

Fig. 19A is a perspective view of hook 23b of first member 2b of fan case 1b according to the third exemplary embodiment. Similarly to hook 23 of the first exemplary embodiment (Fig. 7A), as illustrated in Fig. 19A, each hook 23b has a U shape when viewed from the front of hook 23b, and includes two first pieces 231 and second piece 232. Each of two first pieces 231 has a rectangular plate shape whose lengthways direction is first direction D1, and extends along first direction D1 from end 214 of side portion 211 of first main body 21. Second piece 232 has a rectangular plate shape whose lengthways direction is a direction orthogonal to first direction D1, and connects tips (lower ends in Fig. 19A) of two first pieces 231. Each hook 23b has hooked hole 233 surrounded by two first pieces 231 and second piece 232.

Each hook 23b also has two protrusions 238. Protrusions 238 are provided on first pieces 231 and extend along first direction D1. Part (upper end) of each protrusion 238 is located above first piece 231 and is connected to side portion 211 of first main body 21. As a result, even in a case where stress is generated due to bending of hook 23b, hook 23b can be reinforced by providing protrusions 238.

The plurality of hooks 23b has a plate shape, and has outer surface 234 and inner surface 235 facing each other in thickness directions of hook 23b.

### (2.2) Second member

As illustrated in Figs. 15 and 17, second member 3b includes second main body 31, protrusion 32, and a plurality of claws 33b (only two of which are illustrated in the example in Fig. 15).

### (2.2.1) Claws

As illustrated in Fig. 17, the plurality of claws 33b has a one-to-one correspondence with the plurality of hooks 23b. The plurality of claws 33b is disposed at a plurality of locations on the outer periphery of second member 3b in plan view from first direction D1. The plurality of claws 33b is provided at an end (upper end in Fig. 17) of side portion 311 of second main body 31. More specifically, each claw 33b protrudes from side portion 311 along a direction orthogonal to both first direction D1 and a circumferential direction of side portion 311.

The plurality of claws 33b is provided apart from each other around the other end side of side portion 311 of second main body 31. That is, the plurality of claws 33b is provided a certain distance apart from each other in the circumferential direction of side portion 311.

Fig. 19B is a perspective view of claw 33b of second member 3b of fan case 1b according to the third exemplary embodiment. As illustrated in Fig. 19B, each claw 33b includes two first pieces 335, second piece 336, and third piece 337. Each of two first pieces 335 has a plate shape whose lengthways direction is first direction D1, and protrudes from side portion 311 of second main body 31. Second piece 336 has a plate shape whose lengthways direction is the circumferential direction of side portion 311 of second main body 31, and protrudes from side portion 311. Third piece 337 has a plate shape whose lengthways direction is the circumferential direction of side portion 311, and protrudes from side portion 311 of second main body 31. The protrusion amount of third piece 337 is smaller than the protrusion amount of second piece 336. Two first pieces 335, second piece 336, and third piece 337 are integrally formed. Each claw 33b has recess 338 surrounded by two first pieces 335, second piece 336, and third piece 337.

### (2.3) Coupling between first member and second member

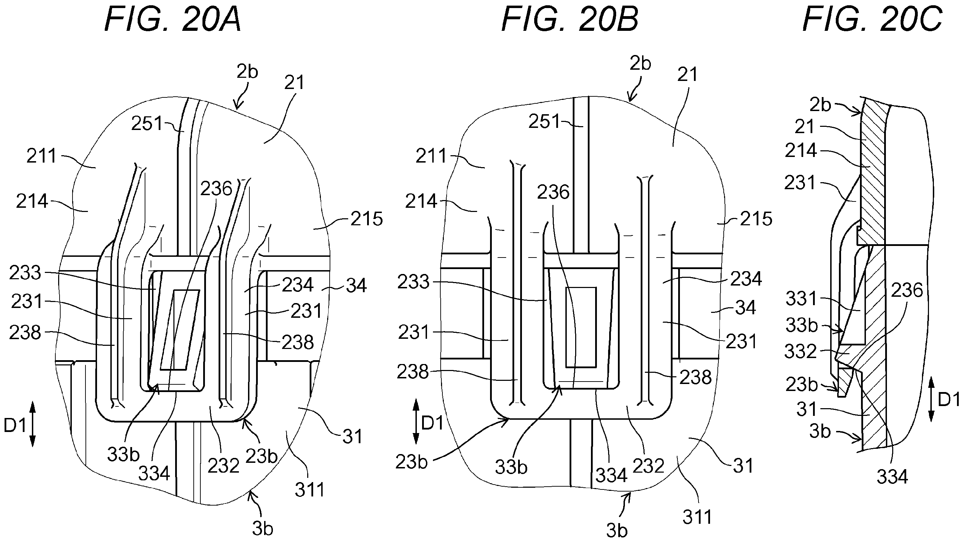

Fig. 20A is a perspective view of hook 23b and claw 33b in fan case 1b according to the third exemplary embodiment with first member 2b and second member 3b fitted to each other. Fig. 20B is a front view of hook 23b and claw 33b in fan case 1b with first member 2b and second member 3b fitted to each other. Fig. 20C is a side view of hook 23b and claw 33b in fan case 1b with first member 2b and second member 3b fitted to each other. As illustrated in Figs. 15 and 20A to 20C, first member 2b and second member 3b are coupled to each other by hooking the plurality of hooks 23b on the plurality of respective claws 33b.

First member 2b and second member 3b are separated from each other before the coupling (a state illustrated in Fig. 17). When first member 2b is brought closer to second member 3b from the above state, hooks 23b of first member 2b come into contact with claws 33b of second member 3b. Specifically, second pieces 232 of hooks 23b come into contact with claws 33b. Subsequently, when first member 2b is brought closer to second member 3b, hooks 23b are bent outward by claws 33b. Claws 33b have larger protrusion amounts, the more apart from second opening 313. Therefore, first pieces 231 of hooks 23b become more and more bent. When first member 2b is brought closer to second member 3b, second pieces 232 of hooks 23b climb over claws 33b. At this time, claws 33b are located in hooked holes 233 of hooks 23b. Hooks 23b return to the original state from the outward bent state. Through the above steps, first member 2b and second member 3b are coupled.

### (3) Modifications

As a modification of the third exemplary embodiment, all of the plurality of hooks 23b do not necessarily extend along first direction D1, and only part of the plurality of hooks 23b may extend along first direction D1. In short, at least one of the plurality of hooks 23b may extend from end 214 of first opening 213 of first main body 21 toward second member 3b along first direction D1.

As a modification of the third exemplary embodiment, outer surfaces 234 of the plurality of hooks 23b may be along outer peripheral surface 215 of first main body 21 in plan view from first direction D1. As a result, the size can be more reduced, and the good appearance can be improved.

A modification of the first exemplary embodiment may be applied to fan case 1b according to the third exemplary embodiment.

Fan cases 1b according to the modifications described above also have effects similar to those of fan case 1b according to the third exemplary embodiment.

Note that the shape of hooks 23, 23a, 23b described above may be trapezoidal or semicircular. Specifically, hooks 23, 23a, 23b may have a shape having a larger width on the side closer to first member 2, 2a, 2b than the width closer to second member 3, 3a, 3b.

### (Fourth exemplary embodiment)

In a fourth exemplary embodiment, vehicle 5 (moving body) including motor unit 4 according to the first exemplary embodiment will be described with reference to the drawings.

### (1) Configuration

Fig. 21 is a schematic diagram of vehicle 5 according to the fourth exemplary embodiment. As illustrated in Fig. 21, vehicle 5 includes motor unit 4, battery 51, controller 52, cable 53, and vehicle body 54 (moving body main body). Note that with respect to motor unit 4 according to the fourth exemplary embodiment, components similar to those of motor unit 4 according to the first exemplary embodiment (see Fig. 1) are denoted by the same reference marks, and the description thereof will be omitted.

In the example illustrated in Fig. 21, vehicle 5 is a four-wheeled hybrid automobile in which an engine and battery 51 for driving are mounted on vehicle body 54. Note that vehicle 5 is not limited to a hybrid automobile, and may be an electric automobile.

Battery 51 includes, for example, a lithium-ion battery or a nickel-metal hydride battery. Battery 51 supplies power to motor 41, a driving motor for causing vehicle 5 to travel, and the like.

Controller 52 is electrically connected to motor unit 4 by cable 53 and controls motor unit 4. More specifically, controller 52 is electrically connected to driving circuit 48 by cable 53 via connector 46 (see Fig. 6). Controller 52 controls battery 51. More specifically, controller 52 controls power supply from battery 51 to motor 41, the driving motor, and the like.

Vehicle body 54 is provided with motor unit 4, battery 51, controller 52, and cable 53.

Motor unit 4 used in vehicle 5 functions as a cooling fan system to suppress a temperature rise of battery 51. In motor unit 4, motor 41 rotationally drives blades 47 to rotate blades 47 and send air to battery 51. As a result, battery 51 is air-cooled, and the temperature rise of battery 51 is suppressed.

### (2) Modifications

As a modification of the fourth exemplary embodiment, vehicle 5 may include motor unit 4 according to the second exemplary embodiment or motor unit 4 according to the third exemplary embodiment instead of motor unit 4 according to the first exemplary embodiment.

As another modification of the exemplary embodiment, a moving body including motor unit 4 is not limited to vehicle 5, and may not be vehicle 5. In the case of motor unit 4 according to the second exemplary embodiment or motor unit 4 according to the third exemplary embodiment, the moving body is not limited to vehicle 5, and may not be vehicle 5, similarly to the case of motor unit 4 according to the first exemplary embodiment.

Vehicle 5 and a moving body according to each modification described above also have effects similar to those of vehicle 5 according to the fourth exemplary embodiment.

The exemplary embodiments and modifications described above are merely part of various exemplary embodiments and modifications of the present disclosure. The exemplary embodiments and the modifications can be variously modified depending on a design and the like as long as an object of the present disclosure can be achieved.

### (Aspects)

The following aspects are disclosed herein.

Fan case (1; 1a) according to a first aspect contains motor (41). In motor (41), rotor (411) that includes rotating shaft (413) extending in first direction (D1) rotates on the axial center of rotating shaft (413) as the rotation center. Fan case (1; 1a) includes first member (2; 2a) and second member (3; 3a). First member (2; 2a) and second member (3; 3a) are coupled to each other along first direction (D1). First member (2; 2a) includes first main body (21) and at least one hook (23; 23a). First main body (21) has first opening (213) that opens toward second member (3; 3a). At least one hook (23; 23a) is disposed on the outer periphery of first main body (21) in plan view from first direction (D1). Second member (3; 3a) includes second main body (31) and at least one claw (33; 33a). Second main body (31) has second opening (313) that opens toward first member (2; 2a). At least one claw (33; 33a) is disposed on the outer periphery of second main body (31) in plan view from first direction (D1), at a position corresponding to at least one hook (23; 23a) to allow at least one hook (23; 23a) to be hooked on at least one claw (33; 33a). At least one of at least one hook (23; 23a) extends from end (214) of first opening (213) of first main body (21) toward second member (3; 3a) along first direction (D1).

In accordance with fan case (1; 1a) according to the first aspect, in plan view from first direction (D1), the protrusion amounts of hook (23; 23a) and claw (33; 33a) in a direction orthogonal to first direction (D1) can be reduced. Therefore, fan case (1; 1a) can be downsized.

Fan case (1; 1a) according to a second aspect is the first aspect in which the at least one hook is a plurality of hooks (23; 23a), and the at least one claw is a plurality of claws (33; 33a). First member (2; 2a) and second member (3; 3a) are coupled to each other by hooking the plurality of hooks (23; 23a) on the plurality of respective claws (33; 33a).

In accordance with fan case (1; 1a) according to the second aspect, first member (2; 2a) and second member (3; 3a) can be more firmly coupled to each other by hooking hooks (23; 23a) on claws (33; 33a) at a plurality of places while fan case (1; 1a) can be downsized.

Fan case (1; 1a) according to a third aspect is the first or second aspect in which at least one of outer surface (234) and inner surface (235) of each of at least one hook (23; 23a) is along outer peripheral surface (215) of first main body (21) in plan view from first direction (D1).

In accordance with fan case (1; 1a) according to the third aspect, fan case (1) is downsized, and the thickness of hook (23) is easily made relatively uniform.

Fan case (1) according to a fourth aspect is the third aspect in which outer surface (234) of hook (23) is curved along outer peripheral surface (215) of first main body (21) in plan view from first direction (D1).

In accordance with fan case (1; 1a) according to the fourth aspect, fan case (1) can be more downsized, and the good appearance of fan case (1) can be improved.

Fan case (1a) according to a fifth aspect is any one of the first to third aspects in which an outer surface of hook (23a) is flat.

In accordance with fan case (1a) according to the fifth aspect, hook (23a) can be easily formed.

Fan case (1; 1a) according to a sixth aspect is any one of the first to fifth aspects in which first member (2; 2a) includes flange (24; 24a). Flange (24; 24a) is at end (214) of first opening (213) of first main body (21). Gap (241) is between flange (24; 24a) and hook (23; 23a) in a circumferential direction of first main body (21).

In accordance with fan case (1; 1a) according to the sixth aspect, first member (2; 2a) and second member (3; 3a) can be easily coupled. Since flange (24; 24a) is apart from hook (23; 23a), stress due to bending of hook (23; 23a) can be made less likely to be transmitted to flange (24; 24a).

Fan case (1) according to a seventh aspect is any one of the first to sixth aspects in which first member (2) includes protrusion (251). Protrusion (251) is on an extension line of hook (23) in first direction (D1) in first main body (21).

In accordance with fan case (1) according to the seventh aspect, since the portion on the extension line of hook (23) can be made thicker than both circumferential-direction ends of first main body (21), the reinforcement can be performed for a force that acts on first main body (21) when hook (23) is bent.

Fan case (1; 1a) according to an eighth aspect is the sixth aspect in which first distance (L21) between flange (24; 24a) and first hooked portion (236) of hook (23; 23a) on which claw (33; 33a) is hooked is shorter in first direction (D1) than second distance (L31) between second opening (313) of second main body (31) and second hooked portion (334) of claw (33; 33a) on which hook (23; 23a) is hooked.

In accordance with fan case (1; 1a) according to the eighth aspect, since the function as a guide can be enhanced when first member (2; 2a) and second member (3; 3a) are coupled, first member (2; 2a) and second member (3; 3a) can be easily coupled.

Fan case (1) according to a ninth aspect is any one of the first to eighth aspects in which first member (2) or second member (3) includes outer peripheral flange (14) of exhaust port (13).

In accordance with fan case (1) according to the ninth aspect, the function as a guide can be enhanced when first member (2) and second member (3) are coupled. Therefore, first member (2) and second member (3) can be easily coupled.

Fan case (1; 1a) according to a tenth aspect is any one of the first to eighth aspects in which the tip of claw (33; 33a) is along outer peripheral surface (215) of first main body (21) in plan view from first direction (D1).

In accordance with fan case (1; 1a) according to the tenth aspect, fan case (1;; 1a) can be downsized, and the good appearance of fan case (1; 1a) can be improved.

Fan case (1; 1a) according to an eleventh aspect is any one of the first to tenth aspects in which first main body (21) has outer peripheral surface (215) including a plurality of regions having different curvatures. A plurality of hooks (23; 23a) is along outer peripheral surface (215).

In accordance with fan case (1; 1a) according to the eleventh aspect, fan case (1; 1a) can be downsized, and the good appearance of fan case (1; 1a) can be improved.

Fan case (1a) according to a twelfth aspect is any one of the first to eleventh aspects in which at least one hook (23a) and at least one claw (33a) are located inside the outermost portion of first main body (21) in plan view from first direction (D 1).

In accordance with fan case (1a) according to the twelfth aspect, fan case (1; 1a) can be more downsized.

Motor unit (4) according to a thirteenth aspect includes fan case (1; 1a) according to any one of the first to twelfth aspects and motor (41).

In accordance with motor unit (4) according to the thirteenth aspect, in fan case (1; 1a), in plan view from first direction (D1), the protrusion amounts of hook (23; 23a) and claw (33; 33a) in a direction orthogonal to first direction (D1) can be reduced, and thus fan case (1; 1a) can be downsized.

A moving body (vehicle 5) according to a fourteenth aspect includes motor unit (4) according to the thirteenth aspect and a moving body main body (vehicle body 54). Motor unit (4) is mounted on the moving body main body.

In accordance with moving body (vehicle 5) according to the fourteenth aspect, in fan case (1; 1a), in plan view from first direction (D1), the protrusion amounts of hook (23; 23a) and claw (33; 33a) in a direction orthogonal to first direction (D1) can be reduced, and thus fan case (1; 1a) can be downsized.

### REFERENCE MARKS IN THE DRAWINGS

1, 1a, 1b: fan case
11, 12, 431: opening
13: exhaust port
14, 14a: outer peripheral flange
141, 144, 231, 331, 335: first piece
142, 145, 232, 332, 336: second piece
143, 146, 337: third piece
147: fourth piece
2, 2a, 2b: first member
21: first main body
211: side portion
212, 312, 443: annular portion
213: first opening
214: end
215: outer peripheral surface
22: protrusion
23, 23a, 23b: hook
233, 237: hooked hole
234: outer surface
235: inner surface
236: first hooked portion
238: protrusion
24, 24a: flange
241: gap
251, 252, 253, 254, 255, 361, 362, 363, 371, 432: protrusion
27: end
3, 3a, 3b: second member
31: second main body
311: side portion
313: second opening
32, 34: protrusion
33, 33a, 33b: claw
35: groove
37: restriction portion
333, 338: recess
334: second hooked portion
4: motor unit
41: motor
411: rotor
413: rotating shaft
5: vehicle (moving body)
54: vehicle body (moving body main body)
L11, L12: length
L21: first distance
L31: second distance
D1: first direction

## Claims

1. A fan case for containing a motor in which a rotor that includes a rotating shaft extending in a first direction rotates on an axial center of the rotating shaft as a rotation center, the fan case comprising a first member and a second member coupled to each other along the first direction,
wherein
the first member includes
a first main body having a first opening that opens toward the second member, and
at least one hook disposed on an outer periphery of the first main body in plan view from the first direction, and
the second member includes
a second main body having a second opening that opens toward the first member, and
at least one claw disposed on an outer periphery of the second main body in plan view from the first direction, at a position corresponding to the at least one hook to allow the at least one hook to be hooked on the at least one claw, at least one of the at least one hook extending from an end of the first opening of the first main body toward the second member along the first direction.

2. The fan case according to Claim 1, wherein the at least one hook is a plurality of hooks, the at least one claw is a plurality of claws, and the first member and the second member are coupled to each other by hooking the plurality of hooks on the plurality of respective claws.

3. The fan case according to Claim 1 or 2, wherein at least one of an outer surface and an inner surface of each of the at least one hook is along an outer peripheral surface of the first main body in plan view from the first direction.

4. The fan case according to Claim 3, wherein the outer surface of the hook is curved along the outer peripheral surface of the first main body in plan view from the first direction.

5. The fan case according to any one of Claims 1 to 3, wherein an outer surface of the hook is flat.

6. The fan case according to any one of Claims 1 to 5, wherein the first member includes a flange at the end of the first opening of the first main body, and a gap is between the flange and the hook in a circumferential direction of the first main body.

7. The fan case according to any one of Claims 1 to 6, wherein the first member includes a protrusion on an extension line of the hook in the first direction in the first main body.

8. The fan case according to Claim 6, wherein a first distance between the flange and a first hooked portion of the hook on which the claw is hooked is shorter in the first direction than a second distance between the second opening of the second main body and a second hooked portion of the claw on which the hook is hooked.

9. The fan case according to any one of Claims 1 to 8, wherein the first member or the second member includes an outer peripheral flange of an exhaust port.

10. The fan case according to any one of Claims 1 to 8, wherein a tip of the claw is along an outer peripheral surface of the first main body in plan view from the first direction.

11. The fan case according to any one of Claims 1 to 10, wherein the first main body is the plurality of hooks, the first main body has an outer peripheral surface including a plurality of regions having different curvatures, and the plurality of hooks is along the outer peripheral surface.

12. The fan case according to any one of Claims 1 to 11, wherein the at least one hook and the at least one claw are located inside an outermost portion of the first main body in plan view from the first direction.

13. A motor unit comprising:
the fan case according to any one of Claims 1 to 12; and
the motor.

14. A moving body comprising:
the motor unit according to Claim 13; and
a moving body main body on which the motor unit is mounted.
